(19)

Europäisches
Patentamt
European
Patent Office
Office européen
des brevets

(11) **EP 2 481 579 A1**

(12) **EUROPEAN PATENT APPLICATION**
published in accordance with Art. 153(4) EPC

(43) Date of publication:
**01.08.2012 Bulletin 2012/31**

(21) Application number: **10818694.1**

(22) Date of filing: **09.09.2010**

(51) Int Cl.:
***B32B 27/08*** (2006.01)     ***B29C 45/14*** (2006.01)
***B32B 27/00*** (2006.01)

(86) International application number:
**PCT/JP2010/065497**

(87) International publication number:
**WO 2011/037018 (31.03.2011 Gazette 2011/13)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **25.09.2009 JP 2009220258**

(71) Applicant: **Toray Industries, Inc.**
**Tokyo 103-8666 (JP)**

(72) Inventors:
• **UTO, Takayuki**
**Otsu-shi**
**Shiga 520-8558 (JP)**
• **OSADA, Syunichi**
**Otsu-shi**
**Shiga 520-8558 (JP)**

(74) Representative: **Webster, Jeremy Mark**
**Mewburn Ellis LLP**
**33 Gutter Lane**
**GB-London EC2V 8AS (GB)**

(54) **MOLDING FILM**

(57)     Provided are a molding film from which a laminate showing no washout of a print layer or disturbance of layers can be obtained at low cost and a molded body using such a film. In the molding film, a layer made of a resin having a glass transition temperature of not less than 150°C is formed between a layer made of a thermoplastic resin and a print layer.

EP 2 481 579 A1

**Description**

TECHNICAL FIELD

The present invention relates to a molding film used to decorate a molded product, and particularly relates to a molding film which provides an excellent decoration of a molded body when used for insert molding.

BACKGROUND ART

Plastic members have been variously used, and, in particular, decorated plastic molded bodies have been widely used, e.g., in electrical appliances and automobile members. Conventionally, as a method of decorating a plastic molded body, a method in which printing, coating, plating, or the like is provided on plastic members molded by injection molding has been used. However, the method has problems in that, for example, the decoratable area is limited depending on the shape and the productivity is poor because of batch process.

For these problems, the insert molding method has been proposed in which a print layer is formed on a pre-printed film, and a resin is injected onto the film for molding. According to this method, decoration can be provided with less influence of the shape of a molded body because the decoration by printing has been provided on a film, and continuous printing can also be performed, whereby molded bodies can be obtained at low cost. However, there has been a problem in that, during the insert molding, depending on the type of resin to be injected or the shape of the molded body of interest, a high-temperature resin causes the ink on the print layer to flow to result in washout of the print layer.

On the other hand, in recent years, as a method of providing decoration without forming a print layer, there is a method utilizing interference reflection at a resin interface by alternately forming more than several dozen layers of different resins (for example Patent Document 1). However, when performing an insert molding by using such a multilayer film, the desired color tone sometimes could not be reproduced because a high-temperature resin causes the multilayer film to partially flow to result in disturbance of the layers even under conventional conditions under which washout of a print layer can be prevented.

For such a problem, the method is disclosed in which washout of a print layer is prevented by forming a protective layer on the upper surface, the side on which a resin is injected, of the print layer (Patent Document 2). However, the protective layer is formed on the surface of the print layer, and therefore the method can prevent washout of the print layer due to the flow of the ink itself of the print layer but cannot prevent the occurrence, in particular, of disturbance of the layers of the multilayer film described above.

PRIOR ART DOCUMENTS

PATENT DOCUMENTS

[Patent Document 1] JP 2009-184284 A
[Patent Document 2] JP 2005-32622 A

SUMMARY OF THE INVENTION

PROBLEMS TO BE SOLVED BY THE INVENTION

In view of the problems of the prior art described above, a main object of the present invention is to provide a molding film which have a simple constitution and from which a molded body which does not cause washout of a print layer or disturbance of layers can be obtained.

MEANS FOR SOLVING THE PROBLEMS

To solve such problems, a principal object of the present invention is to provide a molding film comprising a constitution in which a resin layer made of a thermoplastic resin (hereinafter referred to as a base layer), a layer made of a resin which does not have an observable glass transition temperature at not more than 150°C nor at not more than the glass transition temperature of the thermoplastic resin constituting the base layer (hereinafter referred to as a heat-resistant layer), and a print layer are laminated in the order mentioned. The present invention also provides various modified embodiments thereof.

EFFECTS OF THE INVENTION

By the molding film of the present invention, even when a molded body is produced by insert molding, a molded body which can prevent washout of a print layer and disturbance of layers and which is desirably decorated can be obtained.

MODE FOR CARRYING OUT THE INVENTION

Although the present invention will be specifically described below by way of examples, the present invention is not to be construed as limited to such specific examples, and it will be appreciated that various embodiments can be employed as long as the object of the present invention can be achieved and without departing from the spirit of the invention.

The molding film of the present invention comprises a constitution in which a base layer, a heat-resistant layer, and a print layer are laminated in the order mentioned.

The base layer is made of a thermoplastic resin. By using the base layer made of a thermoplastic resin, a sheet shape can be readily formed by an existing molding method such as extrusion molding; in addition, plasticity is expressed by heating even during molding, and a molded body in which the molding film of the present invention is fixed can be readily obtained. The base layer may be in the form of a monolayer sheet or in the form of a sheet in which a plurality of thermoplastic resins are laminated.

Examples of usable thermoplastic resins constituting the base layer include polyolefin resins such as polyethylene, polypropylene, polystyrene, and polymethylpentene; alicyclic polyolefin resins; polyamide resins such as nylon 6 and nylon 66; aramid resins; polyester resins such as polyethylene terephthalate, polybutylene terephthalate, polypropylene terephthalate, polybutyl succinate, and polyethylene-2,6-naphthalate; polycarbonate resins; polyarylate resins; polyacetal resins; polyphenylene sulfide resins; fluororesins such as tetrafluoroethylene resins, trifluoroethylene resins, chlorotrifluoroethylene resins, tetrafluoroethylene-hexafluoropropylene copolymer, and vinylidene fluoride resins; Acrylic resins, methacryl resins, polyacetal resins; polyglycolic acid resins; and polylactic acid resins. Among them, from the standpoint of strength, heat resistance, transparency, cost, and moldability, it is more preferred that polyester be particularly used. The thermoplastic resin constituting the base layer can contain various additives such as antioxidants, antistatic agents, crystal nucleating agents, inorganic particles, organic particles, detackifiers, heat stabilizers, lubricants, infrared absorbers, ultraviolet absorbers, and doping agents for refractive index adjustment as long as it exhibits thermoplasticity.

The heat-resistant layer is made of a resin, and it is necessary that the resin not have an observable glass transition temperature at not more than 150°C. When the resin does not have an observable glass transition temperature at not more than 150°C, it can be the case that the resin exhibits a glass transition temperature more than 150°C, or the case that the resin has a practically unobservable glass transition temperature such as the case that it has a glass transition temperature at or higher than the decomposition temperature (not less than 150°C in the case of common polymers). The glass transition temperature of the resin constituting the heat-resistant layer needs to be higher than the glass transition temperature of the thermoplastic resin constituting the base layer. If the glass transition temperature of the thermoplastic resin constituting the heat-resistant layer is lower than the glass transition temperature of the resin constituting the base layer, when the resin is used as a molding film, the heat-resistant layer deforms, and it is difficult to prevent washout of the print layer and disturbance of the layers. The heat-resistant layer can be prepared by mixing a plurality of resins, or can be prepared by laminating a plurality of layers of resins which does not have an observable glass transition temperature at not more than 150°C. The heat-resistant layer can contain additives such as organic particles and inorganic particles to the extent that they do not obstruct the object of the present invention.

According to the finding of the present inventors, it was confirmed that washout of the print layer and disturbance of the layers occur during molding because the resin injected at high temperature and high pressure contacts with a molding film in which a print layer is formed, thereby causing softening and flowing of the resin constituting the base layer in addition to heat-induced flowing of the print layer. Thus, the present inventors, as a result of elucidating such a behavior, intensively studied to discover that, if the heat-resistant layer is provided between the base layer and the print layer, the heat-resistant layer supports the base layer and the print layer even when the resin injected at high temperature and high pressure is in contact, whereby softening and flowing of the base layer can be prevented, and washout of the print layer and disturbance of the layers can be prevented. What is important is a position where the heat-resistant layer is provided. In the case where the heat-resistant layer is arranged in the order of a base layer, a print layer, and a heat-resistant layer, the heat-resistant layer has a significant effect of preventing the flow of the print layer, but the thickness, resins, and combination of the print layer and the base layer make it difficult to privent the flow of the base layer. On the other hand, in the case where the heat-resistant layer is arranged in the order of a heat-resistant layer, a base layer, and a print layer, depending on the thickness of the base layer, the object of the present invention sometimes cannot be achieved; for example, the effect of preventing the flow of the print layer cannot be expected, and in addition flow of the resin occurs also near the print layer-side of the base layer. Although such an effect can also be obtained by arranging another layer between the base layer and the heat-resistant layer and between the heat-resistant layer and the print layer, preferably, the base layer and the heat-resistant layer, and the heat-resistant layer and the print layer adhere closely. When the heat-resistant layer adheres closely to the base layer and to the print layer, the effect of preventing the flow and deformation of the base layer and the print layer can be obtained more effectively. Although it is also preferable to provide an adhesion layer between the heat-resistant layer and the base layer and between the heat-resistant layer and the print layer, the thickness between the heat-resistant layer and the base layer and between the heat-resistant layer and the print layer is preferably not more than 10 $\mu$m, more preferably not more than 1 $\mu$m.

Although the upper limit of the glass transition temperature of the resin constituting the heat-resistant layer is not particularly restricted, it is desirably not more than 250°C. With increasing glass transition temperature, the moldability of the heat-resistant layer at such a temperature during molding tends to be reduced, but, in the case where the glass transition temperature of the resin is not more than 250°C, the moldability and the prevention of washout of the print layer and disturbance of the layers are often achieved simultaneously.

The heat-resistant layer is preferably formed over the whole surface of the base layer, but if the area where the print layer is provided is limited, it may be formed only on part of the surface of the base layer correspondingly. Since washout of the print layer and disturbance of the layers are most likely to occur near a gate where the highest-temperature resin is in contact and the pressure is highest, the effect of preventing washout of the print layer and disturbance of the layers can be obtained even by forming the heat-resistant layer only on the part facing to the gate. In addition, although the heat-resistant layer has somewhat poor moldability because of its heat resistance, forming the heat-resistant layer on the part where little or no deformation occurs during molding can prevent washout of the print layer and disturbance of the layers while maintaining the moldability.

The resin constituting the heat-resistant layer in the present invention is not particularly restricted as long as it does not have an observable glass transition temperature at not more than 150°C, and a thermoplastic resin, a thermosetting resin, an electron beam curing resin, and the like can be used. Examples of such resins include polyacrylate, polysulfone, polyether sulfone, polyetherimide, polyamideimide, polyimide, polyphenylene ether, aromatic polyamide (aramid), phenol resins, melamine resins, unsaturated polyester resins, epoxy resins, polyurethane, and silicone. Among them, thermoplastic resins are preferred. Thermosetting resins and electron beam curing resins have no problem in washout of the print layer, but in general they can have a poor adhesiveness to the base layer and print layer made of a thermoplastic resin. In the case of a thermoplastic resin, high-quality molded bodies are easily obtained because of the excellent adhesiveness to the base layer and the print layer. In the present invention, the base layer and the heat-resistant layer are preferably transparent, and more preferably the total light transmittance of the heat-resistant layer is preferably 80% or more. In this case, the design of the print layer can be visually observed by appearance with no degradation of color tone. Depending on the intended use, the base layer and the print layer can contain, for example, fillers or metal particles. In this case, even when the resin injected at higher temperature and higher pressure is in contact, the base layer and the heat-resistant layer do not soften or flow, and washout of the print layer and disturbance of the layers can be prevented more effectively.

Examples of methods of forming the heat-resistant layer include a forming method by coextrusion with the base layer, a forming method by lamination of the base layer in the form of a sheet and the heat-resistant layer in the form of a sheet, and a method of forming the heat-resistant layer by coating the base layer in the form of a sheet. The coextrusion method is very advantageous in terms of cost because the heat-resistant layer can be formed by the same process as that for the base layer, but has problems in that, for example, depending on the combination of resins, there is the case where coextrusion cannot be performed because of the melting point or the melt viscosity, or where uniform layer thickness cannot be achieved, and that it cannot be applied in the case of other than thermoplastic resins. In the lamination method, since the films that are individually provided are laminated, the heat-resistant layer can be provided even by using the combination of resins which is difficult to be used in the coextrusion method, but the lamination method has a problem in that it is disadvantageous in terms of cost because the process is complicated. The coating method is somewhat disadvantageous in terms of cost, but it can be applied to a wide variety of resins as long as they are soluble in a solvent and can also be applied to a thermosetting resin and a photocuring resin. In addition, it also has advantages in that the heat-resistant layer can be readily formed not over the whole surface of the film but only on a specific part and that it can be performed in combination with the process of providing the print layer.

In the present invention, the thickness of the base layer is preferably not less than 10 $\mu$m and not more than 500 $\mu$m. In cases where the thickness of the base layer is less than 10 $\mu$m, the handleability is impaired, and wrinkles, printing failure, film breakage, and the like can easily occur. On the other hand, washout of the print layer and disturbance of the layers are more likely to occur with increasing temperature of the base layer and the print layer during molding. When the thickness of the base layer is not more than 500 $\mu$m, the heat conducted from the injected resin to the base layer and the print layer can be radiated to a low-temperature mold, so that the temperature rise of the base layer and the print layer can be prevented, and the occurrence of washout of the print layer and disturbance of the layers will be easily prevented. More preferably, the thickness of the base layer is not less than 10 $\mu$m and not more than 200 $\mu$m,

and still more preferably not less than 10 μm and not more than 100 μm. When the thickness of the base layer is not less than 10 μm, the thinner the thickness, the more effectively the heat by the resin injected is released to a mold, and washout of the print layer and disturbance of the layers can be prevented.

In the present invention, the thickness of the heat-resistant layer is preferably not less than 1 μm and less than 30 μm. In cases where the thickness of the heat-resistant layer is less than 1 μm, depending on the type of resin and the injection conditions, the effect of preventing washout of the print layer and disturbance of the layers can be insufficient. In cases where the thickness of the heat-resistant layer is not less than 30 μm, the moldability can be impaired. When the thickness of the heat-resistant layer is not less than 1 μm and less than 30 μm, washout of the print layer and disturbance of the layers can be prevented while maintaining the moldability. The lower limit of the thickness of the heat-resistant layer is more preferably not less than 5 μm, in which case washout of the print layer and disturbance of the layers can be prevented more effectively.

The molding film of the present invention preferably has a Young's modulus at 200°C of not less than 10 MPa and not more than 200 MPa. A resin having a high glass transition temperature can impair the moldability because it generally has a high Young's modulus. When the Young's modulus at 200°C is not less than 10 MPa and not more than 200 MPa, the molding film is provided with sufficient moldability and can be used in various shapes of molded bodies. The Young's modulus at 200°C of not less than 10 MPa and not more than 200 MPa can be achieved by reducing the thickness of the heat-resistant layer in addition to selecting the resins of the base layer and the heat-resistant layer.

In the present invention, the dynamic hardness (DH) at 200°C of the heat-resistant layer is preferably not less than 15. Dynamic hardness herein refers to the value calculated by using Equation 1 from the load on a film plane when an indenter is pressed thereinto at a certain temperature and the indentation volume (displacement), and relates to the ease of deformation by the pressure on a film surface. The present applicants discovered that, when a high-temperature and high-pressure resin is injected onto a film plane, the film surface will receive great pressure under a high-temperature atmosphere, and this pressure causes washout of the print layer and disturbance of the layers. Thus, in the case where the dynamic hardness at 200°C of the heat-resistant layer is not less than 15, even when the resin injected at high temperature and high pressure is used, deformation of the heat-resistant layer can be prevented, and washout of the print layer and disturbance of the layers can be prevented. More preferably, the dynamic hardness is not less than 20 and not more than 30, in which case, depending on the type of resin and the injection conditions, washout of the print layer and disturbance of the layers can be substantially prevented, and good moldability can be obtained.

$$DH = A \times P / 9.807 / h^2 \qquad \text{Equation 1}$$

DH: Dynamic hardness
A: Constant determined by indenter
P: Load (mN) at displacement h (μm)
h: Displacement at hardness evaluation (μm)

In the molding film of the present invention, the adhesiveness of the base layer to the heat-resistant layer and of the heat-resistant layer to the print layer is preferably Class 0 or 1 according to the cross-cut test of JIS K 5600-5-6. The cross-cut test of JIS K 5600-5-6 provides an evaluation index of the adhesiveness of the base layer to the heat-resistant layer and of the heat-resistant layer to the print layer, and in the case of Class 0 or 1 according to the cross-cut test, as is also the case when actually a molded body is obtained by using the molding film of the present invention, a molded body having a favorable appearance can be obtained without causing delamination between layers. Also during molding, when the adhesiveness of the base layer to the heat-resistant layer and of the heat-resistant layer to the print layer is good, the base layer and the print layer, even if they are softened, can prevent the heat-resistant layer from flowing by closely adhering to it; however, when the adhesiveness is poor, sliding occurs at each interface, and the effect of preventing the flow of the heat-resistant layer sometimes cannot be obtained sufficiently. Obtaining such a molding film can be achieved when the difference between the SP values of the resins used for the base layer and the heat-resistant layer and for the heat-resistant layer and the print layer is not more than one, and further it is also preferable to provide, between the base layer and the heat-resistant layer and between the heat-resistant layer and the print layer, an adhesion layer made of a resin having a favorable adhesiveness to each layer as required. However, the thickness of the adhesion layer is preferably as thin as possible as mentioned above.

In the molding film of the present invention, the heat-resistant layer preferably has E' at 200°C of not less than 300 MPa. When a high-temperature and high-pressure resin is injected onto a film plane, the film surface will receive great pressure under a high-temperature atmosphere, and this pressure causes washout of the print layer and disturbance of the layers; however, when E' at 200°C of the heat-resistant layer is not less than 300 MPa, unnecessary deformation does not occur even at high temperature and high pressure during molding because of the high rigidity of the heat-resistant layer, and therefore the effect of preventing the flow of the base layer and the print layer becomes significant. Although the upper limit of E' is not specifically defined, the larger E', the higher the Young's modulus at 200°C of the molding film actually obtained, and accordingly the moldability tends to be reduced; therefore, depending on the constitution of the film, the practical range of E' is actually not more than 10 GPa.

It is also preferred that the molding film have E' at 200°C of not less than 300 MPa. If the heat-resistant layer has E' at 200°C of not less than 300 MPa as mentioned above, the film obtained practically has E' within this range, and in this case the moldability during molding and the prevention of washout of the print layer and disturbance of the layers can be achieved at the same time. The larger E', the more significant the effect of preventing washout of the print layer and disturbance of the layers during molding, whereas the larger E', the more likely the moldability during molding is to be reduced. Thus, the practical range of E' at 200°C is preferably not less than 300 MPa and not more than 10 GPa.

In the present invention, the heat-resistant layer preferably has a heat transfer coefficient of not less than 0.20 W/m·K. Washout of the print layer and disturbance of the layers result from the heat of the resin injected. When the heat transfer coefficient of the heat-resistant layer is in the above-described range, the heat of the resin injected is effectively transferred to a mold, and the temperature rise of the print layer and the base layer is prevented, thereby allowing the prevention of washout of the print layer and disturbance of the layers. The upper limit is not particularly restricted, but, for example, when a metal particle-containing resin is used, a heat transfer coefficient higher than the heat transfer coefficient of the polymer itself can be achieved, whereas the adhesive properties to other layers and the moldability are affected; therefore the appropriate upper limit is about 1.00 W/m·K.

The print layer is composed of pigments and dyes for expressing color tone, and if necessary binders. It is formed by printing a solution obtained by dispersing pigments, dyes, and if necessary binders and additives such as an antifoaming agent in a solvent on a heat-resistant layer using various printing methods such as gravure printing method, silk-screen printing method, and flexographic printing method, and drying it. Additives such as surfactants and fillers may be added to the above-described solution for the purpose of, e.g., improving the dispersibility, color developing properties, and flowability and improving the heat resistance and moldability of the ink itself. The print layer is preferably formed by a two-part curable ink. In this case, washout of the print layer during injection molding can be easily prevented, and discoloration due to the film thickness change of the print layer can be prevented.

The thickness of the print layer is preferably not less than 1 μm and not more than 30 μm. When the thickness of the print layer is less than 1 μm, it is difficult to reproduce the desired color tone depending on the type and amount of the pigments and dyes contained in the ink. In addition, the ink containing the pigments, dyes, and the like which forms the print layer is less likely to be thermally deformed than the base layer, and the larger thickness of the print layer produces to some extent the effect of preventing washout of the print layer similarly to the heat-resistant layer; however, when the thickness of the print layer is less than 1 μm, even a slight washout of the print layer and disturbance of the layers can cause a change in appearance. When the thickness of the print layer is more than 30 μm, the moldability can be impaired depending on the shape of the molded body of interest. When the thickness of the print layer is in the above-described range, good moldability can be provided while preventing washout of the print layer and disturbance of the layers.

As described above, when utilizing the interference reflection at a resin interface by alternately forming more than several dozen layers of different resins, the constitution of the present invention allows effective prevention of the disturbance of the layers. Such a film comprising multilayer structure as a base layer is desirably formed in such a manner that two or more thermoplastic resins are alternately laminated by 50 layers or more each, and when the description is made using the case where two thermoplastic resins (a thermoplastic resin A and a thermoplastic resin B; hereinafter, the layer composed of the thermoplastic resin A is called as a layer A, and the layer composed of the thermoplastic resin B is called as a layer B) are used, the optical properties and the layer thickness of the thermoplastic resins A and B allows expression of interference reflectivity and expression of a specific color and metallic luster without using metal materials or color materials (see, for example, JP 2005-059332 A). However, in the case where the base layer composed of a single layer is used, the disturbance of layers at an acceptable level in appearance is observed as a change in interference color because of the interference reflectivity. However, the constitution of the present invention allows the heat-resistant layer to exert an effect of preventing disturbance of the layers, whereby a molded body which shows little change in interference color in appearance can be obtained. The case where the layer A, the layer B, and a layer C made of a resin C are contained can also be exemplified as a preferred lamination form of the base layer, in which case the constitution may be one in which the layer C is laminated as an outermost layer or an intermediate layer, such as CA(BA)n, CA(BA)nC, and A(BA)nCA(BA)m. Here, n and m are an integer, and, for example, when n = 3 in A(BA)n, it means that the lamination is made in the thickness direction in a permutation of ABABABA.

One example of the multilayer film having interference reflectivity described above will now be described in more detail.

The multilayer film described above is capable of reflecting light, and the reflectance is controlled with the difference in refractive index between the layer made of resin A and the layer made of resin B and the number of layers.

$$2 \times (n_a \cdot d_a + n_b \cdot d_b) = \lambda \qquad \text{Equation 2}$$

$n_a$: In-plane average refractive index of layer A
$n_b$: In-plane average refractive index of layer B
$d_a$: Layer thickness of layer A (nm)
$d_b$: Layer thickness of layer B (nm)
$\lambda$: Main reflection wavelength (primary reflection wavelength)

In the present invention, it is preferred that the layer A and the layer B be alternately laminated by at least 50 layers or more. More preferred is 200 layers or more, and still more preferred is 600 layers or more. Having structure in which the layer A and the layer B are laminated by 50 layers or more each allows providing high reflectance and a high-luminance metallic appearance. Further, increasing the number of layers laminated allows further improved reflectance, prevention of the change in shade of color during molding, and furthermore prevention of the change in color tone due to some disturbance of the layers. Although the upper limit of the number of lamination is not particularly limited, not more than 3000 layers is common in normal use considering the reduced wavelength selectivity resulting from the reduced lamination accuracy due to an increased size of an apparatus and too large number of layers.

For the layer A and the layer B, it is preferred that the in-plane average refractive index of the layer A be relatively higher or lower than the in-plane average refractive index of the layer B in order to express interference reflectivity. Further, it is preferred that the difference between the in-plane average refractive index of the layer A and the in-plane average refractive index of the layer B be 0.03 or more. More preferred is 0.05 or more, and still more preferred is 0.1 or more. When the difference between the in-plane average refractive indices is less than 0.03, sufficient reflectance is hardly obtained. Furthermore, when the difference between the in-plane average refractive index of the layer A and the refractive index in the thickness direction is 0.03 or more, and the difference between the in-plane average refractive index of the layer B and the refractive index in the thickness direction is 0.03 or less, decrease in reflectance at the reflection peak does not occur even when an incident angle becomes large, which is more preferred.

For a preferred combination of the thermoplastic resin A and the thermoplastic resin B in the present invention, it is most preferred that the absolute value of the difference between the SP values of the thermoplastic resin A and the thermoplastic resin B be not more than 1.0. When the absolute value of the difference between the SP values is not more than 1.0, interlayer delamination is unlikely to occur. SP value herein refers to a solubility parameter defined by the regular solution theory introduced by Hildebrand. More preferably, it is preferable to have a layer made of the thermoplastic resin A and a layer made of the thermoplastic resin B which comprises the same basic skeleton as that of the thermoplastic resin A. Basic skeleton herein refers to a constituent repeating unit, and, for example, when one of the resins is polyethylene terephthalate, ethylene terephthalate is the basic skeleton. Further, as another example, when one of the resins is polyethylene, ethylene is the basic skeleton. When the thermoplastic resin A and the thermoplastic resin B are resins comprising the same basic skeleton, delamination between layers is more unlikely to occur.

As a preferred combination of the thermoplastic resin A and the thermoplastic resin B, the combination of the thermoplastic resin A and the thermoplastic resin B with the difference between the glass transition temperatures thereof being not more than 20°C is preferred. When the difference between the glass transition temperatures is more than 20°C, thickness uniformity in forming a base layer having multilayer structure becomes poor, whereby a metallic luster appearance is likely to be poor. In addition, also in molding a multilayer film, problems such as occurrence of overstretching are likely to occur.

In the case where a multilayer film is used as a substrate of the molding film of the present invention, it is preferred that the thermoplastic resin A comprise polyethylene terephthalate or polyethylene naphthalate and that the thermoplastic resin B be a polyester comprising spiroglycol. Polyester comprising spiroglycol refers to copolyester obtained by copolymerization with spiroglycol, or homopolyester, or polyester obtained by blending them. Polyester comprising spiroglycol is preferred because it is unlikely to cause overstretching during molding and also unlikely to cause interlayer delamination because of the small difference in glass transition temperature between the polyester comprising spiroglycol and polyethylene terephthalate or polyethylene naphthalate. More preferably, it is preferred that the thermoplastic resin A comprise polyethylene terephthalate or polyethylene naphthalate and that the thermoplastic resin B be polyester comprising a unit of spiroglycol and cyclohexanedicarboxylic acid. When the thermoplastic resin B is polyester comprising spiroglycol and cyclohexanedicarboxylic acid, the difference in in-plane refractive index between the polyester and polyethylene terephthalate or polyethylene naphthalate becomes large, whereby high reflectance is easily obtained. In addition, it is unlikely to cause overstretching during molding and also unlikely to cause interlayer delamination because of the small difference in glass transition temperature between the polyester and polyethylene terephthalate or polyethylene naphthalate and the excellent adhesive properties.

The molding film of the present invention is a film suitable for producing a molded body comprising a resin member at the side where the print layer is formed. Materials of the resin member are not particularly restricted as long as they can be molded by various molding methods, and examples thereof include Acrylic resins, polycarbonate resins, polybutylene terephthalate resins, acrylonitrile-butadiene styrene copolymers (ABS resins), acrylonitrile-styrene copolymers (AS resins), FPR resins, polystyrene resins, polyether methylene resins, polypropylene plastic resins, and the like. The color tone and the shape thereof can be variously selected depending on the purpose. As a preferred resin, a resin having high hardness such as Acrylic resins is preferred because surface hardness is also improved by using it. As a molding method, various molding methods such as vacuum molding, vacuum pressure molding, plug-assist vacuum pressure molding, in-mold molding, insert molding, cold molding, and press molding can be applied, by which methods a three-dimensional shape can be formed at low cost. Molding methods are not particularly limited, and molding can be performed by commonly known molding methods such as, for example, vacuum molding method, vacuum-pressure molding method, blow molding method, press molding method, insert injection molding method, in-mold molding method, and extrusion molding method.

The molding film of the present invention exerts its effect especially when used for insert molding. Insert molding is a method in which a thermoplastic resin melted in an extruder equipped with a screw and the like is poured at a high rate under high-pressure conditions into a mold which is closed by arranging, for example, a film and solidified to obtain a molded body. In insert molding, since a resin is introduced into a mold under high-temperature and high-pressure conditions, washout of the print layer and disturbance of the layers are likely to occur, but these defects can be prevented by using the molding film of the present invention.

In addition, in the molding film of the present invention, functional layers such as a hard coat layer, a coloring layer, a sliding layer, an antistatic layer, an abrasion-resistant layer, an antireflection layer, an UV-absorbing layer, a print layer, a transparent conductive layer, a gas barrier layer, a hologram layer, a release layer, a pressure-sensitive adhesive layer, an emboss layer, and an adhesive layer may be formed on the surface of the base layer opposite the heat-resistant layer.

The molded body thus produced by using the molding film of the present invention can preferably be used in cellular phones, telephones, personal computers, audio instruments, household electrical appliances, wireless communication instruments, radomes, automotive interior and exterior parts, building materials, game consoles, amusement machines, packaging containers, and the like. In particular, the molded body produced by using a molding film having a base layer having multilayer structure is preferably used as a decorative part in instruments having a function of wireless information and communication (wireless information and communication instruments), such as cellular phones, telephones, personal computers, audio instruments, household electrical appliances, wireless communication instruments, on-vehicle equipments such as radomes, and game consoles, and the molded body does not cause electromagnetic interference unlike conventional metallic decorative materials because it is excellent in radio wave transparency while having a metallic appearance. This allows downsizing and thinning of instruments and increases the degree of freedom in circuit design in information and communication instruments.

Now, a preferred method of producing the molded body of the present invention will be described below by way of examples. Needless to say, the present invention is not to be construed as limited to such examples. First, the method of producing a film which serves as a base layer of the molding film will be described.

Thermoplastic resins are provided in the form, for example, of pellets. The pellets are dried in hot air or under vacuum if necessary, and then fed to separate extruders. In each extruder, the extrusion rate of the resin melted by heating to the melting point or higher is equalized with, for example, a gear pump, and foreign matter, denatured resin, and the like are removed through, for example, a filter. These resins are molded into a desired shape with a die, and then discharged. Then, a multi-layer laminated sheet discharged from the die is extruded onto a cooling body such as a casting drum, and cooled to solidify to obtain a casting film. At this time, it is preferable to rapidly cool the sheet to solidify by closely adhering it by electrostatic force to the cooling body such as a casting drum using, for example, a wire-like, tape-like, needle-like, or knife-like electrode. Methods in which the sheet is rapidly cooled to solidify by closely adhering it to the cooling body such as a casting drum by blowing air from a slit-like, spot-like, or plane-like apparatus and in which the sheet is rapidly cooled to solidify by closely adhering it to the cooling body with a nip roll are also preferred.

When producing a multilayer film made of a plurality of thermoplastic resins, a plurality of resins are discharged from different passages using two or more extruders and fed into a multi-layer laminating apparatus. Examples of multi-layer laminating apparatuses which can be used include, for example, a multi-manifold die, a feedblock, and a static mixer, and especially to obtain the constitution of the present invention efficiently, it is preferable to use a feedblock comprising separately at least two or more members having a number of fine slits. When such a feedblock is used, the apparatus will not be extremely large, and therefore the amount of foreign matter due to thermal deterioration is small, thereby allowing a high-accuracy lamination even when the number of lamination is extremely large. Further, lamination accuracy in the width direction is markedly improved compared to the prior art. Furthermore, it also becomes possible to form a constitution with an arbitrary layer thickness. The reason why it becomes possible to achieve an arbitrary layer thickness is that, with this apparatus, the thickness of each layer can be adjusted by the shape of slits (length, width).

The melt multilayer laminate thus formed to have a desired layer constitution is guided to a die to obtain a casting film in the same manner as mentioned above.

When the resin of the heat-resistant layer is a thermoplastic resin, the heat-resistant layer can also be laminated at once. That is, a casting film in which the base layer and the heat-resistant layer are integrated can also be obtained by forming the heat-resistant layer on at least one side of the base layer using a known multi-manifold die.

The casting film thus obtained is preferably biaxially stretched as required. Biaxial stretching herein refers to stretching in the longitudinal direction and the width direction. Stretching may be performed sequentially in two directions or simultaneously in two directions. In addition, re-stretching may be further performed in the longitudinal direction and/or the width direction. Especially in the present invention, it is preferable to use simultaneous biaxial stretching from the standpoint that the difference in in-plane orientation can be reduced and that surface flaw can be prevented.

First, the case of sequential biaxial stretching will be described. Stretching in the longitudinal direction herein refers to stretching for imparting a molecular orientation in the longitudinal direction to a film, and generally performed using the difference in peripheral speed of rolls. This stretching may be performed in a single step or may be performed in multiple steps using a plurality of pairs of rolls. The stretching magnification varies depending on the type of resin; generally, 2- to 15-fold is preferred, and when polyethylene terephthalate is used in any of the resin constituting the multilayer film, 2- to 7-fold is particularly preferably used. Stretching temperature is preferably from the glass transition temperature of the resin constituting the multilayer film to the glass transition temperature + 100°C.

The uniaxially stretched film thus obtained is subjected, if necessary, to a surface treatment such as corona treatment, flame treatment, or plasma treatment, and then functions such as slidability, adhesion properties, and antistatic properties may be imparted thereto by in-line coating. In the case of a thermosetting resin or a resin soluble in a solvent, the heat-resistant layer can be easily formed also by applying an in-line coating to the uniaxially stretched film.

Stretching in the width direction refers to stretching for imparting an orientation in the width direction to a film, and generally, using a tenter, the film is conveyed with both ends held by clips and stretched in the width direction. The stretching magnification varies depending on the type of resin; generally, 2- to 15-fold is preferred, and when polyethylene terephthalate is used in any of the resin constituting the multilayer film, 2- to 7-fold is particularly preferably used. The stretching temperature is preferably from the glass transition temperature of the resin constituting the multilayer film to the glass transition temperature + 120°C.

The film thus biaxially stretched is preferably subjected to a heat treatment in a tenter at a temperature of not lower than the stretching temperature and not higher than the melting point to provide planarity and dimensional stability. By performing a heat treatment, the dimensional stability of the molding film is improved, whereby displacement in printing and molding processes can be prevented, which makes it possible to obtain a desired molding body. After being heat-treated in this way, the film is uniformly and slowly cooled, and then cooled to room temperature to be rolled up. If necessary, a relaxation treatment or the like may be used in combination during from the heat treatment to the slow cooling.

Next, the case of simultaneous biaxial stretching will be described. In the case of simultaneous biaxial stretching, the cast film obtained is subjected, if necessary, to a surface treatment such as corona treatment, flame treatment, or plasma treatment, and then functions such as slidability, adhesion properties, and antistatic properties may be imparted thereto by in-line coating.

Then, the cast film is guided to a simultaneous biaxial tenter, conveyed with both ends of the film held by clips, and stretched simultaneously and/or stepwise in the longitudinal direction and the width direction. Examples of simultaneous biaxial stretching machines include a pantograph-type, a screw-type, a drive motor-type, and a linear motor-type machine, and preferred is a drive motor-type or a linear motor-type one in which the stretching magnification can be optionally changed and in which relaxation treatment can be performed at any location. The stretching magnification varies depending on the type of resin; generally, 6- to 50-fold in area magnification is preferred, and when polyethylene terephthalate is used in any of the resin constituting the multilayer film, 8- to 30-fold in area magnification is particularly preferably used. Especially in the case of simultaneous biaxial stretching, to reduce the difference in in-plane orientation, it is preferred that the stretching magnifications in the longitudinal direction and the width direction be the same and that the stretching rates also be approximately equal. The stretching temperature is preferably from the glass transition temperature of the resin constituting the multilayer film to the glass transition temperature + 120°C.

The film thus biaxially stretched is preferably subjected to a heat treatment continuously in a tenter at a temperature of not lower than the stretching temperature and not higher than the melting point to provide planarity and dimensional stability. In this heat treatment, to prevent the distribution of the main orientation axis in the width direction, it is preferable to perform a relaxation treatment instantly in the longitudinal direction immediately before and/or immediately after the film enters a heat treatment zone. After being heat-treated in this way, the film is uniformly and slowly cooled, and then cooled to room temperature to be rolled up. If necessary, a relaxation treatment may be performed in the longitudinal direction and/or the width direction during from the heat treatment to the slow cooling. The relaxation treatment is performed instantly in the longitudinal direction immediately before and/or immediately after the film enters the heat treatment zone.

Then, a heat-resistant layer is formed on the base layer thus obtained. Examples of the methods include, for example, a method of laminating a film which serves as a heat-resistant layer, a method of coating with a solution containing a resin which serves as a heat-resistant layer, and the method of integral forming by coextrusion mentioned above, and a method can be selected according to the properties of the resin of a heat-resistant layer.

Then, on the film thus obtained in which the base layer and the heat-resistant layer are formed, a print layer is applied by coating or printing to obtain a molding film. Examples of applying methods include, for example, gravure printing, screen printing, and offset printing. Then, it is preferable to preform this molding film as required. As a preforming method, methods such as vacuum molding, vacuum pressure molding, plug-assist vacuum pressure molding, in-mold molding, insert molding, cold molding, press molding, draw molding, and pressure molding are preferred. By performing pre-molding, a better molded body can be obtained.

A molded body can be obtained by integrating the molding film thus obtained or the pre-molded molding film with a resin member by insert molding.

EXAMPLES

Methods of evaluating physical property values used in the present invention will be described.

(Methods of evaluating physical property values)

(1) Film constitution, layer thickness, and the number of layers

Samples obtained by cutting a film cross-sectionally using a microtome were observed using a light microscope at a magnification of 500 × and 1000 × in transparent mode for the determination.

The constitution of the multilayer film in the case where the base layer is a multilayer film was determined by electron microscopy for the samples obtained by cutting a film cross-sectionally using a microtome. That is, using a transmission electron microscope Model H-7100FA (manufactured by Hitachi Ltd.), the cross section of the film was observed under × 40000 magnification at an accelerating voltage of 75 kV, and cross-section photographs were taken to measure the constitution and the number of layers. To obtain high contrast, known dyeing technology which uses, for example, $RuO_4$ and $OsO_4$ were used as required.

(2) Glass transition temperature

Sampling was carried out from a portion of the molding film, and measurements and calculations were made according to JIS-K-7122 (1987) using differential scanning calorimetry (DSC). First, at 1st Run, the temperature was raised from 25°C to 290°C at 20°C/min., held at 290°C for 5 minutes, and then rapidly cooled to 25°C. At the following 2nd Run, the temperature was raised from 25°C to 290°C at 20°C/min. As a glass transition temperature and a melting point of a resin, the value at 2nd Run was used.
Apparatus: "Robot DSC-RDC220" manufactured by Seiko Instrument Inc.
Data analysis: "Disk session SSC/5200"
Sample mass: 5 mg

(3) Dynamic hardness

After removing the print layer of the molding film, measurements and calculations were made by the following method using Micro Compression Testing Machine MCTW-500 (manufactured by Shimadzu Corporation). A diamond triangular pyramid indenter (inter-edge angle: 115°) was used as an indenter, and measurements were made under the conditions of loading rate of 0.892 mN/s, maximum load of 10 mN, and test temperature of 200°C. The dynamic hardness was calculated from the load-displacement curve obtained by the measurements using Equation 1 described above.

(4) Heat transfer coefficient

A sheet was prepared by using a resin having the same composition as that of the resin constituting the heat-resistant layer, and the sheet was cut perpendicular to a plane having a side of 10 mm or more to provide samples. A sensor was set so as to contact the center of the section, and measurements were made under the conditions listed below with the sensor being sandwiched by the other sample cut.

Measuring apparatus: "TPS-2500" manufactured by Hot Disk
Sensor: 7 mm φ
Temperature conditions: 23°C, 60% RH
Output voltage: 0.01 mW
Output time: 20 sec

The number of measurements: 10 - 60

Measurements were made for five samples, and the mean value was used as the heat transfer coefficient.

(5) Young's modulus

A molding film was cut in the longitudinal direction and the width direction into a strip 150 mm long × 10 mm wide to provide a sample. Using a tensile tester (Tensilon UCT-100 manufactured by ORIENTEC Co., LTD.), tensile tests were performed with an initial tensile chuck distance of 50 mm and at a tensile speed of 300 mm/min. In measurement, a film sample was set in a constant-temperature oven preset at a temperature of 200°C, and tensile tests were performed after the preheating for 60 seconds. The Young's modulus was determined from the load-strain curve obtained. Measurements were made five times each in two mutually perpendicular directions for each sample, and evaluations were made using the mean value thereof.

(6) Cross-cut test

Cross-cut tests were performed as described in JIS K 5600-5-6. The samples whose results were classified as Class 0 or 1 were evaluated as good, and the rest as poor.

(7) Dynamic storage modulus E'

The dynamic storage modulus E' and the dynamic loss modulus E" were determined in accordance with JIS-K 7244 (1999) using a dynamic viscoelasticity measuring apparatus "DMS6100" manufactured by Seiko Instruments, Inc. The temperature dependence of the viscoelastic properties of each sheet was measured under the measurement conditions of tensile mode, drive frequency of 1 Hz, chuck distance of 15 mm, and temperature rise rate of 2°C/min. The dynamic storage modulus E' at 200°C was determined from the measurement results. In the evaluation of the heat-resistant layer, a film made only of a heat-resistant layer which was separately prepared to have an arbitrary thickness was prepared, and measurements were made in the same manner using the film.

(8) Washout of print layer

Using a molding film, insert molding was carried out under the following conditions. For the molded bodies obtained, ones which did not show washout of the print layer at any injection speed were evaluated as good; ones which showed washout of the print layer under either condition as fair; and ones which showed washout of the print layer under both conditions as poor.

Locking pressure: 80 tons

Mold temperature: 80°C

Molding resin: polycarbonate "Panlite" (registered trademark) L1225L available from TEIJIN CHEMICALS LTD.

Molding resin temperature: 295°C

Injection speed: 100 mm/s, 250 mm/s

Molded product size: 150 × 50 × 5 mm

(9) Disturbance of the layers

For the cross section of the molded bodies obtained by insert molding under the conditions in (8), cross-section observations were carried out by the same method as in (1). Ones which did not show disturbance of the layers at any injection speed were evaluated as good; ones which showed disturbance of the layers under either condition as fair; and ones which showed disturbance of the layers under both conditions as poor.

(Example 1)

As a film resin constituting the base layer, the polyethylene terephthalate (PET) resin prepared by the method shown below was used.

Into an ester interchange reactor, 100 parts by weight of dimethyl terephthalate (DMT) and 62 parts by weight of ethylene glycol (EG) were charged, and the resulting mixture was melted at 150°C. Then, 0.05 parts by weight of magnesium acetate tetrahydrate was charged, and the reaction was carried out by distilling methanol while raising the temperature of the reactant to 235°C over 3 hours. A predetermined amount of methanol was distilled to complete the reaction, and then 0.02 parts by weight of trimethyl phosphoric acid (TMPA) was added.

After 5 minutes from the addition of TMPA, 0.03 parts by weight of antimony trioxide was added. Thereafter, the reactant was transferred to a polycondensation apparatus.

While stirring the low polymer, the temperature inside the polymerization apparatus was raised gradually from 235°C to 285°C, and besides the pressure was lowered to 130 Pa. Both the time until the final temperature was reached and the time until the final pressure was reached were 90 minutes. At the time when a predetermined stirring torque was obtained, the inside of the polymerization apparatus was brought back to normal pressure with nitrogen gas to stop the polycondensation reaction. The polymer was discharged in strands into cold water, and cut immediately to obtain polyester chips.

The resin A prepared was individually brought into a molten state at 280°C with a twin-screw extruder equipped with a vent, and then guided through a gear pump and a filter to a T-die where it was molded into a sheet form. The sheet was rapidly cooled to solidify on a casting drum, the surface temperature of which was maintained at 25°C by electro-pinning, to obtain a cast film.

The cast film obtained was heated by a group of rolls set at 75°C, and then, within a 100-mm-long stretching section, stretched longitudinally 3.3 times while being heated rapidly with a radiation heater from both sides of the film, after which the film was once cooled. Thereafter, this uniaxially stretched film was subjected to corona discharge treatment in the air on both sides, so that the substrate film had a wetting tension of 55 mN/m, and a lamination-forming film-coating solution comprising (a polyester resin having a glass transition temperature of 18°C) / (a polyester resin having a glass transition temperature of 82°C) / silica particles having an average particle size of 100 nm was applied on the treated surface to form a transparent/sliding/adhesion layer.

This uniaxially stretched film was guided to a tenter, preheated with hot air at 100°C, and then stretched transversely 3.5 times at a temperature of 110°C. The stretched film was subjected as it was to heat treatment with hot air at 248°C in the tenter, and then subjected to relaxation treatment of 7% in the width direction at the same temperature, after which the film was slowly cooled to room temperature, and then rolled up. The film obtained had a thickness of 200 $\mu$m.

Then, on the surface of the base layer, a solution obtained by dissolving a polyether sulfone resin (SUMIKAEXCEL 4100P) available from Sumitomo Chemical Co., Ltd. in N-methyl-2-pyrrolidone was applied as a heat-resistant layer over the whole surface of one side of the above-described PET film using die coating method, after which the film was heated in a hot air oven at 180°C for 10 minutes to form a heat-resistant layer having a thickness of 5 $\mu$m.

A two-part curable ink was then applied by screen printing on the side on which the heat-resistant layer was formed to form a print layer, and then a binder layer was formed to obtain a molding film. The printing conditions are as follows.

<Coloring layer>

Ink: IPX971 available from Teikoku Printing Inks Mfg. Co., Ltd.
Solvent: F-003 available from Teikoku Printing Inks Mfg. Co., Ltd. (10% dilution)
Curing agent: 240 curing agent available from Teikoku Printing Inks Mfg. Co., Ltd.
(10% mixture)
Screen mesh: T-225
Drying: 80°C $\times$ 10 min (box drying)

<Binder>

Binder: IMB-003 available from Teikoku Printing Inks Mfg. Co., Ltd.
Screen mesh: T-225
Drying: 90°C $\times$ 60 min (box drying)
The molding film obtained was then cut to a predetermined size, set in a mold, and insert molded under the following conditions.

Locking pressure: 80 tons
Mold temperature: 80°C
Molding resin: polycarbonate "Panlite" L1225L available from TEIJIN
CHEMICALS LTD.
Molding resin temperature: 295°C
Injection speed: 100 mm/s, 250 mm/s
Molded product size: 150 $\times$ 50 $\times$ 5 mm
The molded body obtained showed no washout of the print layer and had a good moldability. The results are shown in Table 1.

(Example 2)

A molding film and a molded body were obtained in the same manner as in Example 1 except that an aramid film "MICTRON" having a thickness of 5 $\mu$m available from Toray Industries, Inc. was laminated as a heat-resistant layer. The molded body obtained did not show washout of the print layer, but the moldability at the corners of the molded body was somewhat poor. The results are shown in Table 1.

(Example 3)

A molding film and a molded body were obtained in the same manner as in Example 1 except that a laminate film having 901 alternating layers was used as a base layer, which laminate film was obtained by the method described below using as the thermoplastic resin A a PET resin obtained in the same manner as in Example 1 and as the thermoplastic resin B 30 mol.% of cyclohexanedicarboxylic acid and 25 mol.% of spiroglycol co-PET (PE/SPG·T/CHDC) resin prepared by the method described below. The molded body obtained showed no washout of the print layer or disturbance of the layers and had a good moldability and appearance. The results obtained are shown in Table 1.

The method of producing the thermoplastic resin B and the multilayer film will be described. Into a reactor, 53.4 parts by weight of DMT, 23.6 parts by weight of dimethyl cyclohexanedicarboxylate (CHDC), 44 parts by weight of EG, and 30 parts by weight of spiroglycol (SPG) were charged, and an EG solution containing 0.06 parts by weight of manganese acetate tetrahydrate as a reaction catalyst was charged. An EG solution containing 0.01 parts by weight of potassium hydroxide was added thereto, and the contents were dissolved at 150°C and stirred.

Methanol was distilled while slowly raising the temperature of the reaction contents to 235°C over 4 hours with stirring. A predetermined amount of methanol was distilled to complete the reaction. Thereafter, an EG solution containing 0.01 parts by weight of TMPA and an EG slurry containing 0.12 parts by weight of bis(2,6-di-tert-butyl-4-methylphenyl) pentaerythritol-di-phosphite) (PEP36) available from Asahi Denka Kogyo K.K. were added. After the addition of TMPA and the like, an excess of EG was distilled with stirring for 30 minutes, after which 30 ppm, in terms of titanium element, of a titanium catalyst was added, and then an excess of EG was distilled with stirring for 10 minutes. Thereafter, the reactant was transferred to a polycondensation reactor. Then, the pressure was reduced and the temperature was raised while stirring the contents in the polymerization reactor, and polycondensation reaction was carried out while distilling EG. In reducing the pressure, the pressure was reduced from normal pressure to 133 Pa or less over 120 minutes, and in raising the temperature, the temperature was raised from 235°C to 285°C over 90 minutes. When the stirring torque reached a predetermined value, the atmosphere inside the polymerization reactor was brought back to normal pressure with nitrogen gas, and a valve at the lower part of the polymerization reactor was opened to discharge a gut-like polymer into a water tank. The polyester gut cooled in the water tank was cut with a cutter into chips.

The thermoplastic resin A and the thermoplastic resin B thus prepared were individually brought into a molten state at 280°C with a twin-screw extruder equipped with a vent, and then joined at a feedblock of 901 layers through a gear pump and a filter. It was arranged that both the surface layers were composed of the thermoplastic resin A and that the layer thicknesses of the layer A made of the thermoplastic resin A and the layer B made of the thermoplastic resin B adjacent to each other were approximately equal. Then, after being joined at the 901-layer feedblock, guided to a T-die, and molded into a sheet form, the sheet was rapidly cooled to solidify on a casting drum, the surface temperature of which was maintained at 25°C by electro-pinning, to obtain a cast film. The discharge rate was adjusted such that the weight ratio of the thermoplastic resin A to the thermoplastic resin B was about 1, and it was arranged that the thickness ratio of the adjacent layers was about 1.

The cast film obtained was heated by a group of rolls set at 75°C, and then, within a 100-mm-long stretching section, stretched longitudinally 3.3 times while being heated rapidly with a radiation heater from both sides of the film, after which the film was once cooled. Thereafter, this uniaxially stretched film was subjected to corona discharge treatment in the air on both sides, so that the substrate film had a wetting tension of 55 mN/m, and a lamination-forming film-coating solution comprising (a polyester resin having a glass transition temperature of 18°C) / (a polyester resin having a glass transition temperature of 82°C) / silica particles having an average particle size of 100 nm was applied on the treated surface to form a transparent/sliding/adhesion layer.

This uniaxially stretched film was guided to a tenter, preheated with hot air at 100°C, and then stretched transversely 3.5 times at a temperature of 110°C. The stretched film was subjected as it was to heat treatment with hot air at 248°C in the tenter, and then subjected to relaxation treatment of 7% in the width direction at the same temperature, after which the film was slowly cooled to room temperature, and then rolled up. The film obtained had a thickness of 200 $\mu$m, and this film was used as a base layer.

(Example 4)

A molding film and a molded body were obtained in the same manner as in Example 2 except that the multilayer film shown in Example 3 was used as a base layer. The molded body obtained showed no washout of the print layer or disturbance of the layers and had a good appearance, but the moldability at the corners of the molded body was somewhat poor. The results obtained are shown in Table 1.

(Example 5)

A molded body was produced by using a molding film obtained in the same manner as in Example 3 except that the heat-resistant layer was provided by the following method. The molded body obtained showed no washout of the print layer or disturbance of the layers and had a good appearance, but the moldability at the corners of the molded body was somewhat poor. The results obtained are shown in Table 1.

For the heat-resistant layer, a solution obtained by dissolving a polyimide precursor varnish "Torayneece" (registered trademark) available from Toray Industries, Inc. in N-methyl-2-pyrrolidone was applied on the surface of the base layer using die coating method, and then the resultant was heated in a hot air oven at 180°C for 10 minutes to form a heat-resistant layer made of polyimide (PI) having a thickness of 5 $\mu$m.

(Example 6)

A molded body was produced by using a molding film obtained in the same manner as in Example 3 except that the heat-resistant layer was provided by the following method. The molded body obtained did not show washout of the print layer under either molding condition, but showed disturbance of the layers under some conditions. The results obtained are shown in Table 1.

The heat-resistant layer was provided as follows. An Acrylic curing resin "Aronix" available from TOAGOSEI CO., LTD. was applied on the surface of the base layer using a Baker applicator manufactured by TESTER SANGYO CO., LTD. such that the film thickness was 5 $\mu$m. Thereafter, the resin was irradiated with UV light using an ultra-high pressure mercury lamp at a dose of UV light of 1000 mJ/cm$^2$ to form a heat-resistant layer.

(Example 7)

A molded body was produced by using a molding film obtained in the same manner as in Example 3 except that the thickness of the heat-resistant layer was 30 $\mu$m. The molded body obtained showed no washout of the print layer or disturbance of the layers, but the moldability at the corners of the molded body was somewhat poor under some conditions. The results obtained are shown in Table 1.

(Example 8)

A molded body was produced by using a molding film obtained in the same manner as in Example 6 except that base layer thickness was changed. The molded body obtained did not show washout of the print layer under either molding condition, and did not show disturbance of the layers depending on the conditions. The results obtained are shown in Table 1.

(Example 9)

A molding film and a molded body were obtained in the same manner as in Example 3 except that an unstretched PC film having a thickness of 100 $\mu$m formed from a polycarbonate (PC) resin "APEC1700" available from Bayer AG in place of the polyether sulfone resin (SUMIKAEXCEL 4100P) was laminated. The molded body obtained showed washout of the print layer and disturbance of the layers under some conditions. The results obtained are shown in Table 1.

(Example 10)

A molded body was produced by using a molding film obtained in the same manner as in Example 3 except that the heat-resistant layer was provided by the following method. The molded body obtained showed no washout of the print layer or disturbance of the layers and had a good moldability and appearance. The results obtained are shown in Table 2.

For the heat-resistant layer, a solution obtained by dissolving an Acrylic curing resin "KAYANOVA" available from Nippon Kayaku Co., Ltd. in methyl ethyl ketone was applied on the surface of the base layer using a gravure coater, and then the resultant was heated in a hot air oven at 80°C for 1 minute to form a heat-resistant layer having a thickness of 5 $\mu$m.

(Example 11)

A molded body was produced by using a molding film obtained in the same manner as in Example 10 except that the thickness of the heat-resistant layer was changed from 5 μm to 2.5 μm. The molded body obtained was able to prevent washout of the print layer and disturbance of the layers and had a good moldability and appearance under some conditions. The results obtained are shown in Table 2.

(Example 12)

A molded body was produced by using a molding film obtained in the same manner as in Example 10 except that the thickness of the heat-resistant layer was 0.5 μm. The molded body obtained was able to prevent washout of the print layer and disturbance of the layers and had a good moldability and appearance under some conditions, but the range of the conditions was narrower than in Example 11. The results obtained are shown in Table 2.

(Example 13)

A molded body was produced by using a molding film obtained in the same manner as in Example 10 except that the thickness of the print layer was 0.5 μm. The molded body obtained was able to prevent washout of the print layer and disturbance of the layers and had a good moldability and appearance under some conditions. The results obtained are shown in Table 2.

(Example 14)

A molded body was produced by using a molding film obtained in the same manner as in Example 3 except that an adhesion layer was provided between the heat-resistant layer and the base layer. The molded body obtained showed no washout of the print layer or disturbance of the layers and had a good moldability and appearance. Further, it had such a good adhesiveness that it showed no delamination in the cross-cut test. The results obtained are shown in Table 2.

(Comparative Example 1)

A molding film and a molded body were obtained in the same manner as in Example 1 except that the heat-resistant layer is not formed. The molded body obtained showed noticeable washout of the print layer. The results are shown in Table 2.

(Comparative Example 2)

A molding film and a molded body were obtained in the same manner as in Example 3 except that the heat-resistant layer is not formed. The molded body obtained showed noticeable washout of the print layer and also showed disturbance of the layers which could be clearly observed as a change in the shade of color. The results are shown in Table 2.

(Comparative Example 3)

A molding film and a molded body were obtained in the same manner as in Example 3 except that a PET film having a thickness of 25 μm was laminated in place of a heat-resistant layer. The molded body obtained showed noticeable washout of the print layer and also showed disturbance of the layers which could be clearly observed as a change in the shade of color. The results are shown in Table 2.

(Comparative Example 4)

A molding film and a molded body were obtained in the same manner as in Example 3 except that an unstretched PC film having a thickness of 100 μm formed from a polycarbonate (PC) resin "TARFLON A1700" available from Idemitsu Kosan Co., Ltd. was laminated in place of a heat-resistant layer. The molded body obtained showed noticeable washout of the print layer and also showed disturbance of the layers which could be clearly observed as a change in the shade of color. The results are shown in Table 2.
Table 1

| Item | | Unit | Example 1 | Example 2 | Example 3 | Example 4 | Example 5 | Example 6 | Example 7 | Example 8 | Example 9 |
|---|---|---|---|---|---|---|---|---|---|---|---|
| Base layer | The number of layers | | 1 | 1 | 901 | 901 | 901 | 901 | 901 | 901 | 901 |
| | Thermoplastic resin A | | PET | PET | PET | PET | PET | PET | PET | PET | PET |
| | Thermoplastic resin B | | - | - | PE/SPG·T /CHDC | PE/SPG·T /CHDC | PE/SPG·T /CHDC | PE/SPG·T /CHDC | PE/SPG·T /CHDC | PE/SPG·T /CHDC | PE/SPG·T /CHDC |
| | Thickness | μm | 200 | 200 | 200 | 200 | 200 | 200 | 200 | 100 | 200 |
| Heat-resistant layer | Resin | | PES | Aramid resin | PES | Aramid resin | PI | Acrylic UV-curing resin | PES | Acrylic UV-curing resin | PC |
| | Thickness | μm | 5 | 5 | 5 | 5 | 5 | 5 | 30 | 5 | 100 |
| | Glass transition temperature | °C | 225 | 280 | 225 | 280 | 410 | 166 | 225 | 166 | 178 |
| | Dynamic hardness (200°C) | | 18 | 24 | 18 | 24 | 25 | 15 | 18 | 15 | 10 |
| | E' (200°C) | MPa | 3200 | 4000 | 3200 | 4000 | 7000 | 850 | 3200 | 850 | 260 |
| | Heat transfer coefficient | W/m·K | 0.32 | 0.43 | 0.32 | 0.43 | 0.16 | 0.20 | 0.32 | 0.20 | 0.19 |
| Print layer | Thickness | μm | 5 | 5 | 5 | 5 | 5 | 5 | 5 | 5 | 5 |
| Young's modulus (200°C) | | MPa | 178 | 243 | 135 | 210 | 189 | 140 | 148 | 140 | 92 |
| Cross-cut test | | | Poor | Poor | Poor | Poor | Poor | Good | Poor | Good | Good |
| E'(200°C) | | MPa | 360 | 395 | 290 | 310 | 385 | 230 | 440 | 235 | 230 |
| Presence of Washout of print layer | | | Good | Good | Good | Good | Good | Good | Good | Good | Fair |
| Presence of disturbance of layers | | | - | - | Good | Good | Good | Fair | Good | Good | Fair |

16

Table 2

| Item | | Unit | Example 10 | Example 11 | Example 12 | Example 13 | Example 14 | Comparative example 1 | Comparative example 2 | Comparative example 3 | Comparative example 4 |
|---|---|---|---|---|---|---|---|---|---|---|---|
| Base layer | The number of layers | | 901 | 901 | 901 | 901 | 901 | 1 | 901 | 901 | 901 |
| | Thermoplastic resin A | | PET | PET | PET | PET | PET | PET | PET | PET | PET |
| | Thermoplastic resin B | | PE/SPG·T /CHDC | PE/SPG·T /CHDC | PE/SPG·T /CHDC | PE/SPG·T /CHDC | PE/SPG·T /CHDC | - | PE/SPG·T /CHDC | PE/SPG·T /CHDC | PE/SPG·T /CHDC |
| | Thickness | μm | 200 | 200 | 200 | 200 | 200 | 200 | 200 | 200 | 200 |
| Heat-resistant layer | Resin | | Acrylic thermosetting resin | Acrylic thermosetting resin | Acrylic thermosetting resin | Acrylic thermosetting resin | PES | - | - | PET | PC |
| | Thickness | μm | 5 | 2.5 | 0.5 | 5 | 5 | - | - | 25 | 100 |
| | Glass transition temperature | °C | 199 | 199 | 199 | 199 | 225 | - | - | 69 | 145 |
| | Dynamic hardness (200°C) | | 16 | 16 | 16 | 16 | 18 | - | - | 12 | 9 |
| | E' (200°C) | MPa | 600 | 600 | 600 | 600 | 3200 | - | - | 280 | 240 |
| | Heat transfer coefficient | W/m·K | 0.20 | 0.20 | 0.20 | 0.20 | 0.32 | - | - | 0.14 | 0.19 |
| Print layer | Thickness | μm | 5 | 5 | 5 | 0.5 | 5 | 5 | 5 | 5 | 5 |
| Young's modulus (200°C) | | MPa | 163 | 148 | 137 | 159 | 135 | 192 | 86 | 102 | 78 |
| Cross-cut test | | | Good | Good | Good | Good | Good | - | - | Good | Good |
| E' (200°C) | | MPa | 230 | 221 | 212 | 228 | 392 | 280 | 210 | 221 | 220 |
| Presence of Washout of print layer | | | Good | Good | Fair | Good | Good | Poor | Poor | Poor | Poor |
| Presence of disturbance of layers | | | Good | Fair | Fair | Fair | Good | - | Poor | Poor | Poor |

18

INDUSTRIAL APPLICABILITY

The present invention can be suitably used in decoration molding applications.

**Claims**

1. A molding film comprising a constitution in which a resin layer made of a thermoplastic resin (hereinafter referred to as a base layer), a layer made of a resin which does not have an observable glass transition temperature at not more than 150°C nor at not more than the glass transition temperature of the thermoplastic resin constituting the base layer (hereinafter referred to as a heat-resistant layer), and a print layer are laminated in the order mentioned.

2. The molding film according to claim 1, having a Young's modulus at 200°C of not less than 10 MPa and not more than 200 MPa.

3. The molding film according to claim 1 or 2, wherein said heat-resistant layer has a dynamic hardness at 200°C of not less than 15.

4. The molding film according to any one of claims 1 to 3, wherein the adhesiveness of said base layer to said heat-resistant layer and of said heat-resistant layer to said print layer is Class 0 or 1 according to the cross-cut test of JIS K 5600-5-6.

5. The molding film according to any one of claims 1 to 4, wherein said molding film has E' at 200°C of not less than 300 MPa.

6. The molding film according to any one of claims 1 to 5, wherein said heat-resistant layer has E' at 200°C of not less than 300 MPa.

7. The molding film according to any one of claims 1 to 6, wherein said heat-resistant layer has a thickness of not less than 1 $\mu$m and less than 30 $\mu$m.

8. The molding film according to any one of claims 1 to 7, wherein said heat-resistant layer has a heat transfer coefficient of not less than 0.20 W/m·K.

9. The molding film according to any one of claims 1 to 8, wherein said base layer is composed of a layer A made of a thermoplastic resin A and a layer B made of a thermoplastic resin B, and said layer A and said layer B are alternately laminated by at least 50 layers or more.

10. The molding film according to any one of claims 1 to 9, wherein the resin constituting said heat-resistant layer is made of a thermoplastic resin.

11. The molding film according to any one of claims 1 to 9, wherein the resin constituting said heat-resistant layer is soluble in a solvent and formed by coating.

12. The molding film according to any one of claims 1 to 9, wherein the resin constituting said heat-resistant layer is an electron beam curing resin.

13. The insert molding film according to any one of claims 1 to 12.

14. A molded body, wherein the molding film according to any one of claims 1 to 12 is fixed to a surface of an article made of a thermoplastic resin such that said print layer is at the inside.

15. The molded body according to claim 14, which is formed by insert molding.

## INTERNATIONAL SEARCH REPORT

| International application No. |
| --- |
| PCT/JP2010/065497 |

A.  CLASSIFICATION OF SUBJECT MATTER
*B32B27/08*(2006.01)i, *B29C45/14*(2006.01)i, *B32B27/00*(2006.01)i

According to International Patent Classification (IPC) or to both national classification and IPC

B.  FIELDS SEARCHED

Minimum documentation searched (classification system followed by classification symbols)
B32B1/00-43/00, B29C45/00-45/24

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br><br>Y | JP 06-155518 A  (Dainippon Printing Co., Ltd.),<br>03 June 1994 (03.06.1994),<br>claim 1; paragraphs [0001], [0004], [0009] to<br>[0011]; examples; fig. 1, 5<br>(Family: none) | 1-3,5-8,<br>10-15<br>4,9,10 |
| X<br><br>Y | JP 01-176531 A  (Dainippon Printing Co., Ltd.),<br>12 July 1989 (12.07.1989),<br>claims; examples; fig. 1, 3<br>(Family: none) | 1-3,5-8,<br>10-15<br>4,9,10 |
| X<br><br>Y | JP 62-263013 A  (Dainippon Printing Co., Ltd.),<br>16 November 1987 (16.11.1987),<br>claims; page 1, lower right column to page 2,<br>upper left column; examples; fig. 1 to 3<br>(Family: none) | 1-3,5-8,<br>11-15<br>4,9,10 |

|☒| Further documents are listed in the continuation of Box C. | | ☐ | See patent family annex. |
| --- | --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    07 December, 2010 (07.12.10) | Date of mailing of the international search report<br>    21 December, 2010 (21.12.10) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/065497

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2009/096298 A1  (Toray Industries, Inc.), 06 August 2009 (06.08.2009), paragraphs [0028], [0042] & EP 2239136 A1          & KR 2010-0106556 A | 4,9 |
| Y | JP 2005-032622 A  (Toppan Printing Co., Ltd.), 03 February 2005 (03.02.2005), claim 1; paragraphs [0015], [0031], [0048], [0049] (Family: none) | 10 |
| Y | WO 2008/042731 A1  (Exatec L.L.C.), 10 April 2008 (10.04.2008), claims 1, 2 & EP 2076572 A1          & KR 2009-0086535 A & US 2008/085415 A1 | 10 |
| A | JP 50-019132 B1  (Dainippon Printing Co., Ltd.), 04 July 1975 (04.07.1975), entire text (Family: none) | 1-15 |
| A | JP 2000-117778 A  (Dainippon Printing Co., Ltd.), 25 April 2000 (25.04.2000), paragraph [0003] (Family: none) | 1-15 |
| A | JP 54-134762 A  (Matsushita Electric Industrial Co., Ltd.), 19 October 1979 (19.10.1979), entire text (Family: none) | 1-15 |

Form PCT/ISA/210 (continuation of second sheet) (July 2009)

**REFERENCES CITED IN THE DESCRIPTION**

**Patent documents cited in the description**

- JP 2009184284 A
- JP 2005032622 A

- JP 2005059332 A